# EUROPÄISCHE PATENTSCHRIFT

(11) **EP 0 654 893 B1**
(45) Veröffentlichungstag und Bekanntmachung des Hinweises auf die Patenterteilung: **25.02.1998**
(21) Anmeldenummer: 94118221.4
(22) Anmeldetag: 18.11.1994
(51) Int. Cl.: H02P 8/00, H02P 8/12, H02P 8/36

(54) **Treiberschaltung für einen Schrittmotor**
Drive circuit for a stepper motor
Circuit de commande pour un moteur pas-à-pas

(30) Priorität: 19.11.1993 DE 4339553
(43) Veröffentlichungstag der Anmeldung: 24.05.1995
(73) Patentinhaber: SGS-THOMSON MICROELECTRONICS GMBH, 85630 Grasbrunn (DE)
(72) Erfinder: Erckert, Ricardo, D-85617 Assling (DE)
(74) Vertreter: Klunker . Schmitt-Nilson . Hirsch

(56) Entgegenhaltungen:
- EP-A- 0 083 841
- EP-A- 0 311 095
- EP-A- 0 394 941
- DE-A- 3 914 287
- DE-A- 4 115 734
- DE-C- 3 610 253
- PATENT ABSTRACTS OF JAPAN vol. 12, no. 486 (E-695) 19. Dezember 1988 & JP-A-63 202 263 (MATSUSHITA ELECTRIC WORKS LTD) 22. August 1988

## Beschreibung

Die Erfindung betrifft eine Treiberschaltung gemäß Oberbegriff des Anspruchs 1. Eine derartige Treiberschaltung ist aus der EP 0 394 941 A2 bekannt.

Eine Ausführungsform der Erfindung betrifft eine Treiberschaltung für einen Zweiphasen-Schrittmotor mit zwei Motorwicklungen, von denen jede von einer Vollbrückschaltung gespeist wird, wobei jede Vollbrückschaltung eine zwischen die beiden Pole einer Stromversorgungsquelle geschaltete Parallelschaltung mit je zwei in Reihe geschalteten steuerbaren Treiberelementen aufweist und die je zugehörige Motorwicklung zwischen den Verbindungspunkt zwischen den beiden Treiberelementen der einen Reihenschaltung und den Verbindungspunkt der beiden Treiberelemente der anderen Reihenschaltung geschaltet ist, und mit einer Steuerlogikschaltung, die ausgangsseitig mit Steuereingängen der einzelnen steuerbaren Treiberelemente gekoppelt ist und diese zur Abgabe von Wicklungsstromimpulsen für einen Halbschrittbetrieb des Schrittmotors derart steuert, daß abwechselnd nur die eine Motorwicklung, nur die andere Motorwicklung oder beide Motorwicklungen bestromt werden, oder die Steuereingänge der einzelnen steuerbaren Treiberelemente zur Abgabe von bipolaren Wicklungsstromimpulsen für einen Vollschrittbetrieb des Schrittmotors steuert.

Eine derartige Treiberschaltung kann auch für Vollschrittbetrieb gesteuert werden.

Ein Schrittmotor wird durch abwechselndes Bestromen seiner Wicklungen gesteuert. In der aus der EP 0 394 941 A2 bekannten Art zeigt Fig. 2 eine typische Steuersequenz für den aufgrund seiner Laufruhe bevorzugten Halbschrittbetrieb für einen Zweiphasen-Schrittmotor mit zwei Wicklungen. In Fig. 2 (a) ist die bipolare Stromimpulsfolge IL1 für die eine Wicklung dargestellt. Fig. 2 (b) zeigt die bipolare Stromimpulsfolge IL2 für die andere Wicklung. Die aus dieser Steuersequenz für Halbschrittbetrieb resultierende Ankerstellung des Schrittmotors ist in Fig. 2 (c) angedeutet.

Durch das periodische Umschalten der impulsförmigen Wicklungsströme treten elektromagnetische Abstrahlungen sowohl über die mit einem Motortreiber verbundenen Motorzuleitungen als auch über die Versorgungsspannungsleitungen auf. Diese Leitungen wirken dabei als Antennen. Dadurch, daß man die Zuleitungen vom Treiber zum Motor sehr kurz macht, kann man deren Antennenwirkung praktisch eliminieren. Die Versorgungsspannungsleitungen sind jedoch relativ lang und bilden sehr gute Antennen.

Die aus der EP 0 394 941 A2 bekannte Treiberschaltung führt eine Stromregelung auch während des maximalen Stromflusses durch. Dies führt zu einem entsprechenden Spannungsabfall an einem Regeltransistor. Die Folge ist eine hohe Verlustleistung.

Aus der DE 29 44 335 A1 ist es bekannt, die Wicklungen eines Schrittmotors mit Stromimpulsen zu beschicken, die nicht digital sondern treppenförmig mit vier Amplitudenwerten geformt sind. Dadurch kann man die Schrittzahl pro Umdrehung des Schrittniotors erhöhen. Der resultierende Gesamtstrom enthält Stufen, die zu Störabstrahlung führen.

Die aus der DE 29 44 335 A1 bekannte Treiberschaltung arbeitet im Prinzip wie die Treiberschaltung gemäß EP 0 394 941 A2, verwendet jedoch eine getaktete Regelung mit Pulsweitenmodulation. Dies vermindert zwar die Verluste erhöht jedoch die Störabstrahlung.

Unter den bekannten Schrittmotoren gibt es sogenannte choppende oder getaktete Schrittmotortreiber z.B. gemäß der DE 29 44 335 A1, welche die Wicklungen des Schrittmotors während einer jeden Bestromungsphase mit einer Reihe von Impulsen beaufschlagen, und nicht choppende Schrittmotortreiber (z.B. gemäß der EP 0 394 941 A2), welche die einzelnen Wicklungen während jeder Bestromungsphase mit einem einzigen Stromimpuls beaufschlagen.

Bei choppenden Schrittmotortreibern erfolgt eine Stromregelung durch eine Pulsweitenmodulation der Spannung über der jeweils bestromten Motorwicklung. Mit den heute üblichen Schaltfrequenzen von einigen 10 kHz treten ohne geeignete Abblockmaßnahmen erhebliche elektromagnetische Abstrahlungen auf. Ein nicht unerheblicher Teil des schaltungsmäßigen und finanziellen Gesamtaufwandes für ein Schrittmotorsystem mit derartiger Stromregelung wird für die Abblockmaßnahmen benötigt. Ein typischer integrierter Schrittmotortreiber mit choppender Stromregelung ist der PBL 3717 von SGS-Thomson, dargestellt in dem zugehörigen Datenblatt.

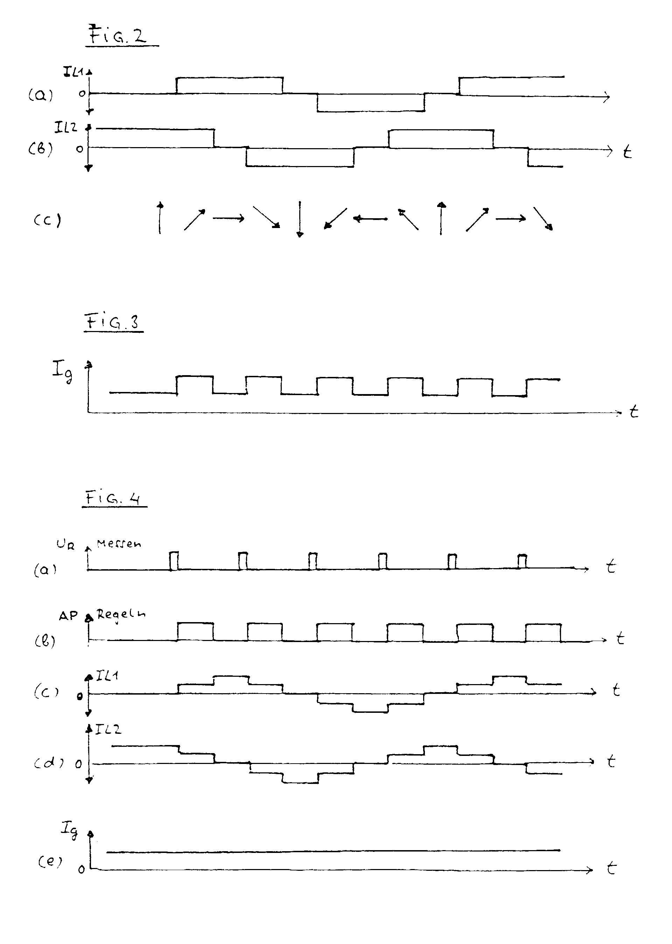

Bei nicht choppenden Schrittmotortreibern erfolgt eine Stromeinstellung über den Ohmschen Widerstand einer jeden Motorwicklung. Die im Zusammenhang mit dem choppenden Schrittmotortreiber erwähnten Chopperstörungen aufgrund der hohen Schaltfrequenzen entfallen bei nicht choppenden Schrittmotortreibern. Die Stromimpulse, wie sie in den Figuren 2 (a) und 2 (b) gezeigt sind, verursachen aber im Falle steiler Impulsflanken immer noch störende Abstrahlung. Die Abstrahlung über die Zuleitungen vom Schrittmotortreiber zu den Motorwicklungen kann, wie bereits erwähnt, dadurch sehr stark reduziert werden, daß die Zuleitungen vom Schrittmotortreiber zu den Motorwicklungen sehr kurz gehalten werden, so daß diese Zuleitungen nicht mehr als Antennen wirken. Allerdings enthält der Gesamtstrom Ig, den das System aus Schrittmotor und Schrittmotortreiber über Vesorgungsspannungsleitungen aus der Versorgungsspannungsquelle entnimmt, nach wie vor einen großen Wechselstromanteil mit der vierfachen Frequenz der Ansteuersequenz. Dies ist in Fig. 3 dargestellt. Zu den Zeitpunkten, zu denen beide Motorwicklungen bestromt sind, ist die Stromaufnahme des Systems doppelt so hoch wie zu den Zeitpunkten, zu denen nur eine Motorwicklung bestromt ist. Dies wirkt so, als ob dem niedrigen Stromaufnahmewert Impulse überlagert sind. Dies führt zu Störabstrahlung über die Versorgungsspannungsleitungen.

In manchen Anwendungen versucht man, die Störabstrahlung über die Motorzuleitungen und die Versorgungsspannungsleitungen durch entsprechend langsame Schaltflanken des Schrittmotortreibers zu verringern. Das Problem der Störabstrahlung wird dadurch gemildert, jedoch nicht grundsätzlich eliminiert.

Ein Beispiel für diese Technik ist der integrierte Schrittmotortreiber MC 33192 von Motorola, dargestellt im zugehörigen Datenblatt.

Der Erfindung liegt die Aufgabe zugrunde, einen Schrittmotortreiber verfügbar zu machen, der hochfrequente Anteile auf den Versorgungsspannungsleitungen vermeidet.

Eine Lösung dieser Aufgabe ist in Anspruch 1 angegeben. Weiterbildungen dieser Lösung sind in Anspruch 2 für einen Halbschrittbetrieb und in Anspruch 4 für einen Vollschrittbetrieb angegeben. Weitere Weiterbildungen sind in den Unteransprüchen angegeben.

Für einen Halbschrittbetrieb besteht die erfindungsgemäße Lösung darin, daß bei der eingangs angegebenen Treiberschaltung in jeder Reihenschaltung eines der beiden Treiberelemente als steuerbarer Schalter und das andere Treiberelement als steuerbares Verstärkerelement betrieben wird, daß eine Stromfühlereinrichtung vorgesehen ist, die den durch die jeweils bestromte(n) Motorwicklung(en) fließenden Wicklungsgesamtstrom erfaßt, daß eine Speichereinrichtung vorgesehen ist, die den jeweils während der Bestromung nur einer der beiden Motorwicklungen von der Stromfühlereinrichtung erfaßten Wicklungsstromwert speichert, und daß eine Regelschaltung vorgesehen ist, die den während der Bestromung jeweils der beiden Motorwicklungen durch die beiden Vollbrückenschaltungen fließenden Gesamtbrückenstrom über die steuerbaren Verstärkerelemente auf den Wert des bei der jeweils vorausgehenden Bestromung nur einer der beiden Motorwicklungen gespeicherten Wicklungsstromwertes regelt.

Für den Fall des Vollschrittbetriebs besteht die erfindungsgemäße Lösung bei der eingangs angegebenen Treiberschaltung darin, daß in jeder Reihenschaltung eines der beiden Treiberelemente als steuerbarer Schalter und das andere Treiberelement als steuerbares Verstärkerelement betrieben wird, daß eine Flankensteilheitsverminderungsschaltung zur Abschrägung der Impulsflanken der den Motorwicklungen zugeführten Stromimpulse auf eine vorbestimmte Flankenschräge vorgesehen ist, daß die Steuerlogikschaltung die Steuereingänge der einzelnen Treiberelemente derart steuert, daß die Polaritätswechsel der Stromimpulse der einen Motorwicklung gegenüber den Polaritätswechseln der Stromimpulse der anderen Motorwicklung um 90° phasenverschoben sind, daß eine Stromfühlereinrichtung vorgesehen ist, die den durch die jeweils bestromte(n) Motorwicklung(en) fließenden Wicklungsgesamtstrom erfaßt, daß eine Speichereinrichtung vorgesehen ist, die den jeweils während der maximalen Bestromung beider Motorwicklungen von der Stromfühlereinrichtung erfaßten Wicklungsgesamtstromwert speichert, und daß eine Regelschaltung vorgesehen ist, die jeweils während einer Flankenschräge eines der beiden Wicklungsstromimpulse den durch beide Vollbrückenschaltungen fließenden Gesamtbrückenstrom über die steuerbaren Verstärkerelemente auf den Wert des bei der jeweils vorausgehenden maximalen Bestromung beider Motorwicklungen gespeicherten Wicklungsstromwert regelt.

Bei der zuvor erwähnten Phasenverschiebung von 90° sind ein symmetrisch gewickelter Motor und runder Lauf des Motors vorausgesetzt. Bei unrundem Lauf und/oder unsymmetrisch gewickeltem Motor können von 90° abweichende Phasenverschiebungen möglich sein.

Der Erfolg der erfindungsgemäßen Lösungen besteht darin, daß nun sowohl bei Halbschrittbetrieb als auch bei Vollschrittbetrieb über die Versorgungsspannungsleitungen eine konstante Stromaufnahme erfolgt, so daß keine zu Störstrahlungen führenden Wechselspannungsanteile mehr auf den Versorgungsspannungsleitungen vorhanden sind. Obwohl die Versorgungsspannungsleitungen nach wie vor als Antennen wirken können, findet über sie keine Störabstrahlung mehr statt.

Die Flankensteilheitsverminderung im Fall des Vollschrittbetriebs kann bereits in der Steuerlogikschaltung erzeugt und dem Schrittmotortreiber aufgezwungen werden. Alternativ dazu kann aber auch die Flankensteilheitsverminderung erst in dem Schrittmotortreiber durchgeführt werden.

Man kann aber auch bei Halbschrittbetrieb eine Flankensteilheitsverminderung vornehmen, um eine Störabstrahlung über Motorzuleitungen, die aus irgendeinem Grund nicht so kurz gemacht werden können, daß sie nicht mehr als Antennen wirken, zu vermeiden.

Man kann sowohl für Vollschrittbetrieb als auch für Halbschrittbetrieb ein und dieselbe Treiberschaltung verwenden. Für diese beiden Betriebsarten muß die Steuerlogikschaltung unterschiedliche Ansteuersignale bereitstellen. Ob Vollschrittbetrieb oder Halbschrittbetrieb vorliegt, kann in der Steuerlogikschaltung direkt aus den Ansteuersignalen erkannt werden. Vollschrittbetrieb zeichnet sich durch den direkten Übergang der Vollbrücken von leitend in einer ersten Richtung zu leitend in einer dazu entgegengesetzten zweiten Richtung bzw. von leitend in der zweiten Richtung zu leitend in der ersten Richtung aus. Im Halbschrittbetrieb erfolgt der Übergang für die jeweils umgesteuerte Vollbrücke von nicht leitend zu leitend.

In jedem Brückenzweig, also jeder Treiberelement-Reihenschaltung einer Brückenschaltung eines der beiden Treiberelemente als steuerbaren Schalter und das andere Treiberelement als steuerbares Verstärkerelement zu betreiben, ist an sich bereits bekannt aus den bereits genannten beiden Druckschriften EP 0 394 941 A2 und DE 29 44 355 A1.

Bei der EP 0 394 941 A2 dient diese Maßnahme dazu, Wicklungsungleichmäßigkeiten zu kompensieren, die ohne eine solche Kompensation zu Schrittfehlern des Schrittmotors führen. Zu deren Überwindung ist eines der beiden Treiberelemente durch den Transistor eines Stromspiegels gebildet, über den diesem Treiberelement der konstante Strom einer Konstantstromquelle dann aufgeprägt wird, wenn dieses Treiberelement zusammen mit einem Schalttransistor des anderen Brückenzweiges der Vollbrücke leitend geschaltet wird.

Bei der DE 29 44 335 A1 wird, wie bereits erwähnt, eine Unterteilung der Schrittweite und damit eine Erhöhung der Schrittzahl pro Umdrehung durch treppenförmig abgestufte Impulse bewirkt. Zu diesem Zweck wird ein Treiberelement eines jeden Brückenzweiges durch einen steuerbaren Transistor gebildet, der mit Hilfe eines Flipflop ein- und ausgeschaltet wird und dem im eingeschalteten Zustand über den Ausgang eines Komparators, dessen einem Eingang das Ausgangssignal eines den Wicklungsstrom messenden Stromfühlerwiderstandes und dessen anderem Eingang eine von einem Festwertspeicher bestimmte Referenzspannung veränderbaren Spannungswertes zugeführt wird, eine Steuerspannung zugeführt wird, die zu einem Wicklungsstrom mit einem momentanen Stufenwert führt, der dem momentan vom Festspeicher abgegebenen Speicherwert entspricht.

Aus der EP 0 083 841 A1 ist eine Schrittmotorsteuerung bekannt, mittels welcher ein Schrittmotor entweder im Schrittbetrieb oder im Linearbetrieb betrieben werden kann. Jeder von zwei Motorwicklungen ist eine Vollbrückenschaltung mit zwei Brückensweigen zugeordnet, die je zwei Schalttransistoren in Reihenschaltung aufweisen. Jeder Wicklung ist ein Stromfühlerwiderstand zugeordnet, dessen Spannungswert mittels eines Spannungsteilers in Abhängigkeit von dem Auslesewert eines Festwertspeichers jeweils auf eine von mehreren möglichen Teilspannungen herabgeteilt werden kann. Diese wird in einem Komparator mit einer Referenzspannung verglichen, die von einem Dreieckgenerator stammt. Mittels Phasentreiberschaltungen, denen einerseits ein Ausgangswert des Festwertspeichers und andererseits das Ausgangssignal des Komparators zugeführt werden, können die Schalttransistoren der Vollbrückenschaltung in das Leiten von Wicklungsströmen unterschiedlicher Stromstufenhöhen gesteuert werden. Beim Linearbetrieb des Schrittmotors soll diese abgestufte Ansteuerung der Schalttransistoren zu einem konstanten Gesamtstrom durch die beiden Motorwicklungen führen. Da hierbei keine Regelung beteiligt ist, ist jedoch nicht sichergestellt, daß ein konstanter Gesamtstrom unter allen Betriebsbedingungen auch tatsächlich erreicht wird.

Aus der DE 36 10 253 C2 ist es bereits an sich bekannt, im Zusammenhang mit einer Steuerschaltung für einen kommutatorlosen Gleichstrommotor eine Flankensteilheitsverminderungsschaltung vorzusehen, mittels welcher die Steilheit der Treibersteuerimpulse vermindert wird.

Die Erfindung wird nun anhand einer bevorzugten Ausführungsform näher erläutert. In den Zeichnungen zeigen:
- Fig. 1: ein Schaltbild einer erfindungsgemäßen Ausführungsform einer Treiberschaltung für einen Zweiphasen-Schrittmotor;
- Fig. 2: einen Halbschrittbetrieb herkömmlicher Art, wobei die Figuren 2 (a) und 2 (b) Steuersequenzen für die beiden Wicklungen eines Zwei-Phasen-Schrittmotors zeigen und Fig. 2 (c) schematisch die aufeinanderfolgenden Ankerstellungen des Schrittmotors im Halbschrittbetrieb darstellt;
- Fig. 3: die Stromaufnahme herkömmlicher Treiberschaltungen für Halbschrittbetrieb;
- Fig. 4: einen Halbschrittbetrieb bei Verwendung einer erfindungsgemäßen Treiberschaltung, wobei Fig. 4 (a) Meßwerte des Wicklungsgesamtstroms, Fig. 4 (b) die Gesamtstromaufnahme der Treiberschaltung während Regelphasen, Figuren 4 (c) und (d) die resultierenden Wicklungsströme durch die beiden Motorwicklungen des Zweiphasen-Schrittmotors und Fig. 4 (e) die Gesamtstromaufnahme der Treiberschaltung darstellen; und
- Fig. 5: Stromverläufe bei Verwendung der erfindungsgemäßen Treiberschaltung für Vollschrittbetrieb, wobei Figuren 5 (a) und (b) den Verlauf der Ströme durch die beiden Wicklungen des Zweiphasen-Schrittmotors, Fig. 5 (c) die Gesamtstromaufnahme der Treiberschaltung ohne Regelung, Fig. 5 (d) die durch die Stromregelung erzeugte zusätzliche Stromaufnahme und Fig. 5 (e) die Gesamtstromaufnahme der erfindungsgemäßen Treiberschaltung bei Vollschrittbetrieb darstellen.

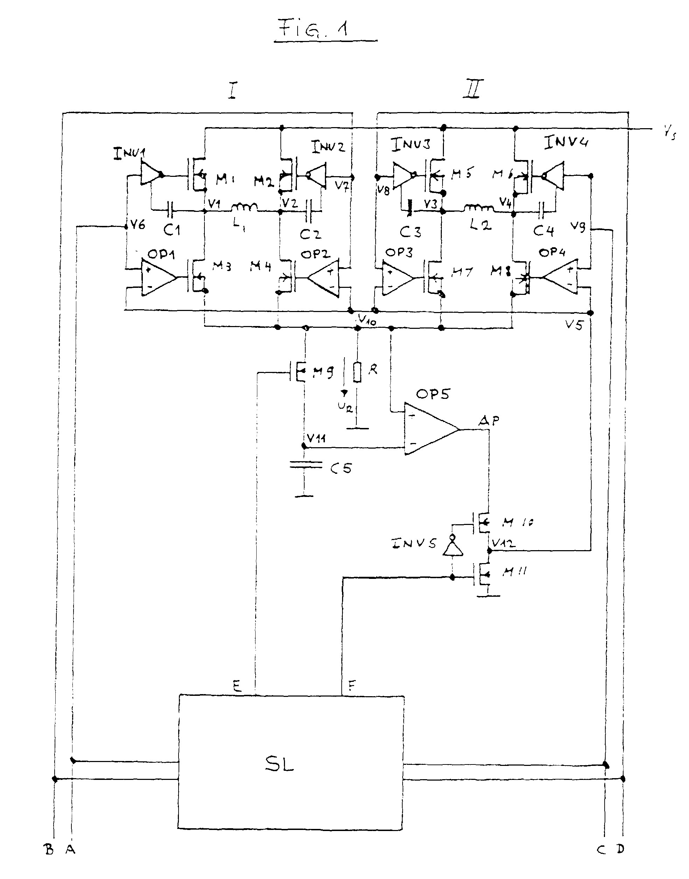

Fig. 1 zeigt eine erfindungsgemäße Treiberschaltung mit zwei Vollbrücken I und II, die den Strom durch je eine von zwei Motorwicklungen L1 bzw. L2 eines Zweiphasen-Schrittmotors steuern. Jede Vollbrücke weist in bekannter Weise vier Transistoren, bei der dargestellten Ausführungsform in Form von N-Kanal-MOS-Transistoren M1 bis M8 auf. Jede der beiden Vollbrücken I und II ist durch die Parallelschaltung zweier Reihenschaltungen mit je einem zur Spannungsversorgungsleitung Vs weisenden Transistor M1, M2, M5 bzw. M6 und mit einem nach Masse weisenden Transistor M3, M4, M7 bzw. M8 aufgebaut. Für die weitere Beschreibung dieser Ausführungsform werden die zur Spannungsversorgungsleitung Vs weisenden Transistoren "obere Transistoren" und die zu Masse weisenden Transistoren "untere Transistoren" genannt. Die oberen und unteren Transistoren einer jeden Reihenschaltung sind je in einem Verbindungspunkt V1, V2, V3 bzw. V4 miteinander verbunden. Die Motorwicklung L1 ist zwischen die beiden Verbindungspunkte V1 und V2 der Vollbrücke I geschaltet. Die Motorwicklung L2 ist zwischen die Verbindungspunkte V3 und V4 der Vollbrücke II geschaltet. Alle vier Reihenschaltungen sind einen Endes gemeinsam mit der Spannungsversorgungsleitung Vs verbunden und anderen Endes über einen Fühlerwiderstand R mit Masse.

Die Gates der oberen Transistoren M1, M2, M5 und M6 sind an die Ausgänge von Invertern INV1, INV2, INV3 bzw. INV4 angeschlossen. Die Gates der unteren Transistoren M3, M4, M7 und M8 sind an die Ausgänge von als Differenzverstärker wirkenden Operationsverstärkern OP1, OP2, OP3 bzw. OP4 angeschlossen. Invertierende Eingänge der Operationsverstärker OP1 bis OP4 sind in einem Verbindungspunkt V5 zusammengeschlossen. Der nicht invertierende Eingang eines jeden der Operationsverstärker OP1, OP2, OP3 und OP4 ist in einem je zugehörigen Verbindungspunkt V6, V7, V8 bzw. V9 mit dem Eingang des je zugehörigen der Inverter INV1, INV2, INV3 bzw. INV4 verbunden. Zugehörig heißt in diesem Fall, daß ein Operationsverstärker und ein Inverter derselben Reihenschaltung aus einem oberen Transistor und einem unteren Tranistor zugeordnet sind.

Eine Steuerlogikschaltung SL weist vier Ausgänge auf, an denen die Treiberschaltung in den gewünschten Halbschrittbetrieb oder Vollschrittbetrieb steuernde Logiksignale A, B, C und D verfügbar sind. Logiksignal A ist auf den Verbindungspunkt V6 geführt und steuert die Reihenschaltung M1, M3 der Vollbrückenschaltung I. Das Logiksignal B ist auf den Verbindungspunkt V7 geführt und steuert die Reihenschaltung M2, M4 der Vollbrückenschaltung I. Die Logiksignale C und D sind auf die Verbindungspunkte V9 bzw. V8 geführt und steuern die Reihenschaltung M6, M8 bzw. die Reihenschaltung M5, M7 der Vollbrückenschaltung II.

Zwischen die Verbindungspunkte V1, V2, V3 und V4 und den je zugehörigen Inverter INV1, INV2, INV3 bzw. INV4 ist je ein Kondensator C1, C2, C3 bzw. C4 zum Zweck der Flankensteilheitsverminderung geschaltet.

Dem Fühlerwiderstand R ist eine Reihenschaltung aus einem Schalttransistor M9 und einem weiteren Kondensator C5 parallel geschaltet. C5 dient als Speicherkondensator und M9 bildet einen Speicherschalter. Ein Verbindungspunkt V10, in dem der Fühlenwiderstand R mit allen unteren Transistoren M3, M4, M7, M8 verbunden ist, ist mit einem nicht invertierenden Eingang eines als Differenzverstärker arbeitenden weiteren Operationsverstärkers OP5 verbunden. Dessen invertierender Eingang ist mit einem Verbindungspunkt V11 zwischen dem Schalttransistor M9 und dem Speicherkondensator C5 verbunden. Der Ausgang des Operationsverstärkers OP5 ist über eine Reihenschaltung aus zwei weiteren Schalttransistoren M10 und M11 mit Masse verbunden. Ein Verbindungspunkt V12 zwischen den beiden Schalttransistoren M10 und M11 ist mit dem Verbindungspunkt V5 verbunden. Die Steuerlogikschaltung SL weist zwei weitere Steuerausgänge E und F auf. Steuerausgang E ist mit dem Gate des Schalttransistors M9 verbunden. Steuerausgang F ist mit dem Gate des Schalttransistors M11 direkt und mit dem Gate des Schalttransistors M10 über einen weiteren Inverter INV5 verbunden.

Alle oberen Transistoren M1, M2, M5 und M6 werden als Schalter betrieben, die von der Steuerlogikschaltung SL über die Inverter INV1, INV2, INV3 bzw. INV4 geschaltet werden. Alle unteren Transistoren M3, M4, M7 und M8 werden als gesteuerte Bauelemente betrieben, wobei die Steuerung über die Operationsverstärker OP1, OP2, OP3 bzw. OP4 unter Beeinflussung durch die Steuerlogikschaltung SL und, je nach Schaltzustand der Schalttransistoren M10 und M11, durch das Ausgangssignal des Operationsverstärkers OP5 erfolgt.

Die Schalttransistoren M9 und M11 sind normalerweise leitend und der Schalttransistor M10 ist normalerweise gesperrt. Sind die Schalttransistoren M9 und M11 leitend, wird der Speicherkondensator C5 auf den Spannungsabfall über dem Fühlerwiderstand R aufgeladen und liegen die invertierenden Eingänge der Operationsverstärker OP1 bis OP4 über den leitend geschalteten Schalttransistor M11 praktisch an Masse. Das Ausgangssignal des Operationsverstärkers OP5 ist dabei über M10 gesperrt.

Durch Sperren von M9 kann man den Spannungswert, auf welchen C5 aufgeladen ist, speichern.

Sind M10 leitend und M11 sperrend geschaltet, liegt das Ausgangssignal von OP5 an den invertierenden Eingängen von OP1 bis OP4. Ist M9 gleichzeitig gesperrt, vergleicht OP5 den über dem Fühlerwiderstand R vorhandenen Spannungsabfall als Istwert mit dem im Speicherkondensator C5 gespeicherten Spannungswert als Sollwert. Die Potentiale an den invertierenden Eingängen von OP1 bis OP4 hängen vom Ausgangssignal von OP5 und damit von diesem Vergleich zwischen Sollwert und Istwert ab. Während M10 leitet, wird der Betriebszustand der unteren Transistoren M3, M4, M7 und M8 somit nicht nur von den Logiksignalen A bis D bestimmt, sondern auch von dem Ergebnis des mit OP5 durchgeführten Sollwert-Istwert-Vergleich.

Die Operationsverstärker OP1 bis OP4 haben vorzugsweise eine geringe Verstärkung, z.B. von etwa 3, um schädliche Offset-Fehler zu vermeiden. Außerdem ist es von Vorteil, die Operationsvertärker OP1 bis OP4 und die Transistoren M1 bis M8 in den Vollbrücken I und II paarweise mit möglichst identischem Verhalten zu selektieren.

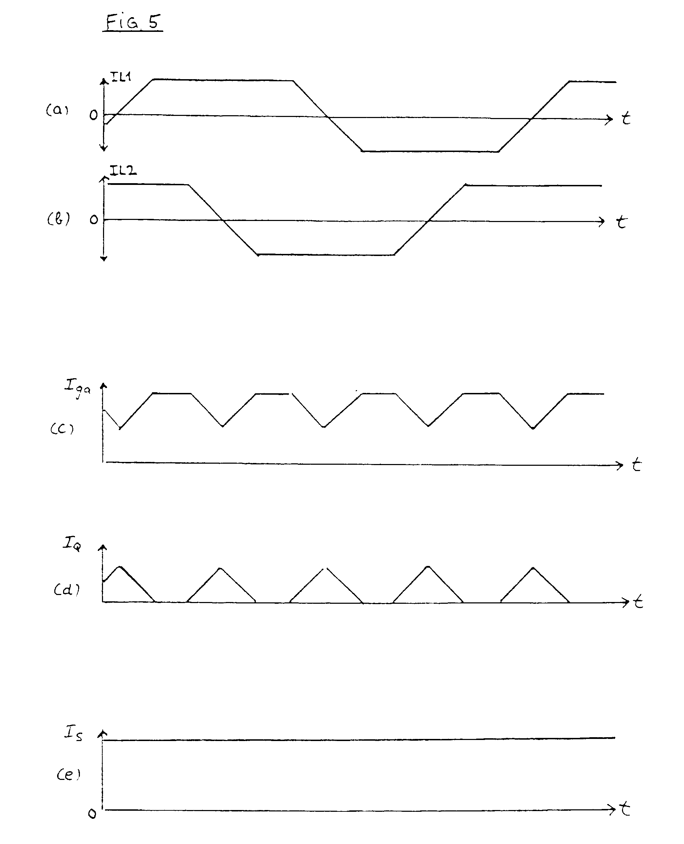

Die Funktion der in Fig. 1 gezeigten Treiberschaltung wird nun näher erläutert, und zwar zunächst für Halbschrittbetrieb unter Zuhilfenahme der Fig. 4 und danach für Vollschrittbetrieb unter Zuhilfenahme der Fig. 5.

Vollbrücken-Treiberschaltungen herkömmlicher Art, die nicht mit der Regelschaltung OP1 bis OP5, R, C5 versehen sind, arbeiten bekanntlich derart, daß während der Zeit, während welcher eine Wicklung L1 und/oder L2 bestromt werden soll, in der zugehörigen Vollbrücke ein Diagonalstrom dadurch erzeugt wird, daß ein oberer Transistor auf der einen Seite und ein unterer Transistor auf der anderen Seite der betroffenen Motorwicklung gleichzeitig leitend und die anderen beiden Transistoren sperrend geschaltet werden. Soll beispielsweise die Motorwicklung L1 bestromt werden, werden je nach gewünschter Stromrichtung entweder die Transistoren M1 und M4 oder die Transistoren M2 und M3 gleichzeitig leitend geschaltet. Zu diesem Zweck werden herkömmlicherweise sämtliche vier Transistoren einer Vollbrücke als reine Schalter betrieben, die sich entweder im Sperrzustand oder im voll leitenden Zustand befinden.

Abweichend von herkömmlichen Treiberschaltungen werden bei der erfindungsgemäßen Treiberschaltung die unteren Transistoren M3, M4, M7 und M8 als analog steuerbare Elemente, hier Verstärkerelemente genannt, betrieben, die über die Operationsverstärker OP1 bis OP4 je nach dem Schaltzustand von M10 und M11 entweder in einen Verstärkerbetrieb oder in einen Schalterbetrieb gesteuert werden.

Bei Betrieb der Treiberschaltung nach Fig. 1 im Halbschrittbetrieb werden die Motorwicklungen L1 und L2 mit bipolaren Stromimpulsen IL1 und IL2 betrieben, deren Phasenlagen mit den in den Figuren 2 (a) und (b) betriebenen Steuersequenzen übereinstimmen, die jedoch während der jeweiligen Bestromung keine konstante Höhe aufweisen sondern die in Figuren 4 (c) und (d) gezeigten abgestuften Formen. Während nur eine der beiden Stromwicklungen L1 und L2 bestromt ist, liefert die zuständige Vollbrücke den maximalen Strom. Während beide Wicklungen L1 und L2 bestromt sind, werden sie je von einem Strom durchflossen, dessen Wert halb so groß sein soll wie der zuvor nur durch eine Motorwicklung geflossene Strom. Wie der in Fig. 4 (e) dargestellte Verlauf des Gesamtstroms Ig zeigt, ist in diesem Fall die Gesamtstromaufnahme der Treiberschaltung konstant.

Um dies zu erreichen, wird während derjenigen Zeit, während welcher nur eine der beiden Motorwicklungen L1 und L2 von Strom durchflossen ist, dieser Strom mit Hilfe des Fühlerwiderstandes R gemessen. In dem Moment, in welchem zusätzlich die andere Motorwicklung bestromt wird, wird das vorausgehende Meßergebnis gespeichert. Mit Hilfe des gespeicherten Wertes als Sollwert wird anschließend der Gesamtstrom durch die Treiberschaltung auf den zuvor gespeicherten Wert geregelt. Als Ergebnis ist der Gesamtstrom durch die Schaltung während der Bestromung zweier Motorwicklungen genauso groß wie der Gesamtstrom durch die Treiberschaltung während der Bestromung nur einer Motorwicklung, so daß die Gesamtstromaufnahme der Treiberschaltung gemäß Fig. 4 (e) konstant bleibt.

Diese Stromregelung bleibt aktiv, solange beide Motorwicklungen L1 und L2 bestromt werden.

Dieser zeitliche Betriebsablauf wird durch die Treiberschaltung nach Fig. 1 folgendermaßen erreicht:

Während der Bestromung nur einer der beiden Motorwicklungen L1 und L2 sind die Schalttransistoren M9 und M11 leitend geschaltet, während Schalttransistor M10 sperrt. Der Speicherkondensator C5 wird auf eine Spannung aufgeladen, die dem Spannungsabfall über dem Fühlerwiderstand und damit dem Gesamtstrom durch die Treiberschaltung entspricht. Infolge des Sperrens von M10 ist die Stromregelung mit Hilfe der Operationsverstärker OP1 bis OP5 unterbrochen. Da M11 leitet, liegen die invertierenden Eingänge von OP1 bis OP4 praktisch auf Masse. Derjenige der unteren Transistoren M3, M4, M7 und M8, der den Strom durch die leitende Motorwicklung L1 oder L2 ermöglicht, befindet sich daher in seinem voll leitenden Zustand. In dem Zeitpunkt, zu welchem die Steuerlogikschaltung SL solche Logiksignale A bis D auf die Treiberschaltung gibt, daß zusätzlich zu der bereits bestromten Motorwicklung auch noch die andere Motorwicklung bestromt wird, gibt die Steuerlogikschaltung SL über ihre Ausgänge E und F derartige Steuersignale ab, daß M9 und M11 sperrend und M10 leitend geschaltet werden. Dies führt einerseits zur Speicherung desjenigen Spannungswertes, auf den der Speicherkondensator C5 zu diesem Zeitpunkt aufgeladen ist. Dies führt andererseits dazu, daß die invertierenden Eingänge von OP1 bis OP4 nicht mehr praktisch an Masse sondern praktsich am Ausgangspotential von OP5 liegen. Dieses Ausgangspotential hängt von der Abweichung des nun über dem Fühlerwiderstand R liegenden Spannungsabfalls (Istwert) von dem in C5 gespeicherten Spannungswert (Sollwert) ab. Ist der Istwert höher als der Sollwert, entsteht am Ausgang von OP5 ein entsprechend hohes Potential, so daß die Differenzspannung zwischen den beiden Eingängen eines jeden der Operationsverstärker OP1 bis OP4 entsprechend niedrig ist, wobei vorausgesetzt ist, daß die HIGH-Potentiale der Logiksignale A bis D identisch sind, so daß die unteren Transistoren M3, M4, M7 und M8 auf schwächeres Leiten gesteuert werden, was wiederum zu einer Verringerung des Gesamtstroms durch die Treiberschaltung führt, bis es zu einem Spannungsabfall über dem Fühlerwiderstand R kommt, der mit dem in C5 gespeicherten Wert übereinstimmt.

Ist der Istwert niedriger als der Sollwert, entsteht am Ausgang von OP5 ein entsprechend niedrigeres Potential. Dieses hat eine entsprechend höhere Differenzspannung und eine entsprechend höhere Ausgangsspannung der Operationsverstärker OP1 bis OP4 zur Folge. Die unteren Transistoren M3, M4, M7 und M8 werden entsprechend stärker leitend gesteuert. Der Gesamtstrom durch die Treiberschaltung und dementsprechend der Spannungsabfall über dem Fühlerwiderstand R steigen daher an, bis der Istwert dem Sollwert entspricht.

Infolge der Aktivierung der Regelkreise OP5, OP1; OP5, OP2; OP5, OP3 und OP5, OP4 wird während der Regelphase der Strom durch jede der beiden Vollbrücken I und II auf die Hälfte desjenigen Stroms geregelt, der zuvor durch die allein bestromte Motorwicklung L1 oder L2 geflossen ist. Der Gesamtstrom durch beide Vollbrücken I und II bleibt dadurch konstant. Die Welligkeit des von der Treiberschaltung über die Spannungsversorgungsschaltungen aufgenommenen Stroms ist daher beseitigt. Die Spannungsversorgungsleitungen strahlen somit keine hochfrequenten elektromagnetischen Störungen mehr ab. Die Phasen der Strommessung und der Stromregelung sind in den Figuren 4 (a) bzw. (b) gezeigt. In Fig. 4 (a) ist angenommen, daß die Strommessung in Form einer Aufladung des Speicherkondensators C5 auf den Spannungsabfall U_{R} über den Fühlerwiderstand R nur während einer kurzen Zeitdauer am Ende der Bestromung nur einer der beiden Motorwicklungen erfolgt, durch entsprechend kurzes Leitendschalten von M9. Diese Strommessung kann aber auch über einen längeren Zeitraum erfolgen, beispielsweise während der gesamten Zeitdauer, während welcher nur eine Motorwicklung bestromt ist.

Gemäß Fig. 4 (b) dauern die Regelphasen so lange, wie jeweils beide Motorwicklungen bestromt sind. Dargestellt ist in Fig. 4 (b) das Ausgangspotential AP von OP5. Je nach Abweichung zwischen Istwert und Sollwert während der Regelphase ändert sich die Höhe dieses Ausgangspotentials während des Regelbetriebs.

Im Halbschrittbetrieb bedarf es keiner Flankensteilheitsverminderung oder Flankenabschrägung der Bestromungsimpulse, um Störabstrahlungen zu vermeiden. Störabstrahlungen auf den Spannungsversorgungsleitungen treten wegen der erfindungsgemäßen Regelung nicht auf. Störabstrahlungen über die Motorzuleitungen können dadurch vermieden werden, daß diese sehr kurz gemacht werden. Dennoch kann eine Flankensteilheitsverminderung vorteilhaft sein, um Überschwingungen zu vermeiden, die durch steile Impulsflanken bewirkt werden könnten.

Anhand der Fig. 5 wird nun die Arbeitsweise der Treiberschaltung gemäß Fig. 1 im Vollschrittbetrieb betrachtet.

Beim herkömmlichen Vollschrittbetrieb mit bekannten Treiberschaltungen werden die beiden Motorwicklungen L1 und L2 je mit bipolaren Stromimpulsen beschickt. Dies geschieht gegenphasig für die beiden Motorwicklungen L1 und L2 derart, daß das Ein- und Ausschalten einer der beiden Motorwicklungen immer exakt zu denjenigen Zeitpunkten passiert, zu welchen die andere Motorwicklung aus- bzw. eingeschaltet wird. Könnte man ideale Stromimpulse voraussetzen, ergäbe sich deshalb eine konstante Gesamtstromaufnahme der Treiberschaltung, Störabstrahlungen über die Spannungsversorgungsleitungen gäbe es dann nicht.

Da die impulsförmigen Ströme Motorwicklungen, also induktive Komponenten, durchfließen, kommt es zu den Abschaltzeitpunkten, also den abfallenden Impulstlanken, zu Abschaltspitzen in den Wicklungsströmen. Diese Abschaltspitzen tauchen auf den Versorgungsspannungsleitungen auf und führen zu entsprechender Störabstrahlung.

Die erfindungsgemäße Treiberschaltung erzeugt einerseits Stromimpulse in den Motorwicklungen L1 und L2, die zu den Zeiten der Polaritätswechsel flankensteilheitsvermindert sind. Andererseits sind die Stromimpulse durch die beiden Motorwicklungen L1 und L2 gegeneinander um 90° phasenverschoben. Beides ist in den Figuren 5 (a) und (b) dargestellt, welche die Ströme IL1 und IL2 durch L1 und L2 zeigen.

Die Phasenbeziehung zwischen den beiden Wicklungsströmen IL1 und IL2 wird durch die Logiksignale A bis D der Steuerlogikschaltung SL vorgegeben. Die Flankensteilheitsverminderung kann entweder bereits auf den Logiksignalen A bis D vorhanden sein oder durch die flankensteilheitsvermindernden Kondensatoren C1 bis C4 bewirkt werden. Möglich sind auch beide Maßnahmen in Kombination.

Fig. 5 (c) zeigt die Gesamtstromaufnahme Iga der Treiberschaltung ohne Regelung mit den Operationsverstärkern OP1 bis OP5. Während der Phasen, während welcher beide Motorwicklungen L1 und L2 maximal bestromt sind, weist der Gesamtstrom den doppelten Wert des Stroms durch jede der beiden Motorwicklungen L1 und L2 auf. Während jedes flankensteilheitsverminderten Polaritätswechsels kommt es zu einem vorübergehenden V-förmigen Einbruch der Gesamtstromaufnahme. Ein derartiger Gesamtstromverlauf würde zu einer entsprechenden Welligkeit auf den Spannungsversorgungsleitungen und somit zu einer Störabstrahlung über die Spannungsversorgungsleitungen führen.

Bei der erfindungsgemäßen Treiberschaltung wird nun jeweils während des flankensteilheitsverminderten Polaritätswechsels in der einen oder der anderen der beiden Motorwicklungen L1, L2 die Regelschaltung mit den Operationsverstärkern OP 1 bis OP5 aktiviert. Die Regelung führt dazu, daß während der flankensteilheitsverminderten Polaritätswechsel, also während der Stromeinbrüche, welche in der Gesamtstromaufnahme Iga ohne Regelung auftreten würden, Querströme durch die Reihenschaltungen derjenigen der beiden Vollbrücken I und II auftreten, welche diejenige der beiden Motorwicklungen L1 und L2 versorgt, in welcher gerade der jeweilige flankensteilheitsverminderte Polaritätswechsel auftritt. Die geregelten Querströme, in Fig. 5 (d) gezeigt und mit IQ bezeichnet, haben etwa die Form eines umgekehrten V und haben einen solchen Verlauf und eine solche Höhe, daß sie die Stromeinbrüche in Fig. 5 (c) kompensieren, die dortigen V-förmigen Stromlücken sozusagen glättend auffüllen. Das Ergebnis ist eine konstante Gesamtstromaufnahme der Treiberschaltung, wie sie in Fig. 5 (e) gezeichnet und mit Is bezeichnet ist.

Die Regelung geschieht bei dem Vollschrittbetrieb dadurch, daß der Gesamtstrom durch beide Motorwicklungen L1 und L2 während derjenigen Phasen gemessen wird, während welcher beide Motorwicklugnen L1 und L2 voll oder maximal bestromt sind. Zum Beginn eines darauffolgenden flankensteilheitsverminderten Polaritätswechsels in einer der beiden Motorwicklungen L1, L2 wird der zuvor gemessene Gesamtstromwert gespeichert. Während der gesamten Phase des jeweiligen flankensteilheitsverminderten Polaritätswechsels wird dann der Gesamtstrom durch die Treiberschaltung als Istwert mit dem zuvor gespeicherten Meßwert als Sollwert verglichen. Das Ergebnis dieses Vergleichs wird zur Regelung der die Stromeinbrüche kompensierenden Querströme verwendet.

Mit der in Fig. 1 gezeigten Treiberschaltung wird dies folgendermaßen erreicht:

Über den Ausgang E der Steuerlogikschaltung SL wird M9 während mindestens eines Teils der jeweiligen Phasendauer, während welcher beide Motorwicklungen L1, L2 voll bestromt sind, leitend geschaltet, um den dem Gesamtstrom entsprechenden Spannungsabfall über dem Fühlerwiderstand R im Speicherkondensator C5 abzubilden. Während der gesamten Dauer der Phase der jeweiligen vollen Bestromung beider Motorwicklungen L1 und L2 sind M10 sperrend und M11 leitend geschaltet, so daß keine Regelung stattfinden kann. Sobald in einer der Motorwicklungen L1 und L2 ein flankensteilheitsvermindernder Polaritätswechsel beginnt, werden M9 und M11 sperrend und wird M10 leitend geschaltet. Dadurch wird die Regelung aktiviert, mit dem nun in C5 gespeicherten vorausgehenden Meßwert als Sollwert und dem nun über dem Fühlerwiderstand R auftretenden, sich in Abhängigkeit von der Polaritätswechselflanke ändernden Spannungsabfall als Istwert.

Während der Regelphase werden Transistoren der Vollbrücken I und II, die bei der jeweiligen momentanen Polarität der durch die Vollbrücken fließenden Wicklungsströme ohne Regelung nicht leiten würden, infolge der Regelung in einen derartigen leitenden Zustand gesteuert, daß solche Querströme über die zugehörigen Reihenschaltungen der Vollbrücken I und II fließen, daß es zu einer konstanten Gesamtstromaufnahme der Treiberschaltung gemäß Fig. 5 (e) kommt. Das heißt, die in einen Polaritätswechsel gesteuerte Vollbrücke zieht während der Zeit, in der die umgesteuerte Wicklung nicht den vollen Strom erhält, so viel Querstrom, daß die Gesamtstromaufnahme der Treiberschaltung konstant bleibt.

Daher gilt wieder, daß die Welligkeit des Gesamtstroms der Treiberschaltung verschwindet und die Spannungsversorgungsleitungen somit keine hochfrequenten elektromagnetischen Störungen mehr abstrahlen können.

Die erfindungsgemäße Methode zur Ausregelung der Welligkeit der Gesamtstromaufnahme eignet sich auch für Elektromotoren mit größerer Wicklungsanzahl, wie zum Beispiel elektronisch kommutierte Drehstrommotoren. Dabei wird die Messung des zu speichernden Stromwertes immer während solcher Phasen vorgenommen, in denen sich ein Gesamtstromwert identisch oder im wesentlichen identisch wiederholt. Die Regelung wird jeweils während solcher Phasen durchgeführt, während welcher der Gesamtstrom von demjenigen Gesamtstrom abweicht, welcher während der Meßphasen auftritt.

## Patentansprüche

1. Treiberschaltung für einen elektronisch kommutierten elektrischen Motor, insbesondere Schrittmotor, mit n Motorwicklungen (L1, L2), von denen jede von einer von n Vollbrückenschaltungen (I, II) gespeist wird, wobei jede der Vollbrückenschaltungen (I, II) eine zwischen die beiden Pole (Vs, Masse) einer Stromversorgungsquelle geschaltete Parallelschaltung mit je zwei in Reihe geschalteten steuerbaren Treiberelementen (M1-M8) aufweist und die zugehörige Motorwicklung (L1, L2) zwischen den Verbindungspunkt (V1, V3) zwischen den beiden Treiberelementen (M1, M3, M5, M7) der einen Reihenschaltung und den Verbindungspunkt (V2, V4) zwischen den beiden Treiberelemente (M2, M4, M6, M8) der anderen Reihenschaltung geschaltet ist,
und mit einer Steuerlogikschaltung (SL), die ausgangsseitig mit Steuereingängen der einzelnen steuerbaren Treiberelemente (M1-M8) gekoppelt ist und diese zur Abgabe von Wicklungsstromimpulsen derart steuert, daß in der Gesamtstromaufnahme der Treiberschaltung eine Tendenz zu einer Wechselstromkomponente besteht,
**dadurch gekennzeichnet,**
daß in jeder Reihenschaltung eines der beiden Treiberelemente als steuerbarer Schalter (M1, M2, M5, M6) und das andere Treiberelement als steuerbares Verstärkerelement (M3, M4, M7, M8) betrieben wird;
daß eine Stromfühlereinrichtung (R) vorgesehen ist, die den jeweils durch die Treiberschaltung fließenden Gesamtstrom erfaßt;
daß eine Speichereinrichtung (M9, C5) vorgesehen ist, die den Wert des durch die Treiberschaltung fließenden Gesamtstroms speichert, der welcher während solcher Phasen fließt, in denen der Gesamtstrom sich im wesentlichen identisch wiederholt;
und daß eine Regelschaltung (OP1-OP5) vorgesehen ist, die nur während solcher Phasen aktiv ist, in denen der durch die Treiberschaltung fließende Gesamtstrom eine Tendenz zur Abweichung von dem zuvor gemessenen und gespeicherten Wert aufweist, und die während der Phasen der Regelung über die steuerbaren Verstärkerelemente (M3, M4, M7, M8) in die Stromverhältnisse in den einzelnen Vollbrückenschaltungen (I, II) derart eingreift, daß der durch die Treiberschaltung fließende Gesamtstrom auf den gespeicherten Meßwert geregelt wird.

2. Treiberschaltung nach Anspruch 1, für einen Zweiphasen-Schrittmotor,
mit zwei Motorwicklungen (L1, L2), von denen jede von einer Vollbrückenschaltung (I, II) gespeist wird, wobei die Treiberelemente (M1-M8) von der Steuerlogikschaltung (SL) zur Abgabe von Wicklungsstromimpulsen für einen Halbschrittbetrieb des Schrittmotors gesteuert werden, derart, daß abwechselnd nur die eine Motorwicklung (L1), nur die andere Motorwicklung (L2) oder beide Motorwicklungen (L1, L2) bestromt werden,
**dadurch gekennzeichnet,**
daß die Speichereinrichtung (C5, M9) den jeweils während der Bestromung nur einer der beiden Motorwicklungen (L1, L2) von der Stromfühlereinrichtung (R) erfaßten Gesamtstrom speichert und daß die Regelschaltung (OP1-OP5) nur während der Bestromung jeweils der beiden Motorwicklungen (L1, L2) aktiv ist und dann den durch die Treiberschaltung fließenden Gesamtstrom über die steuerbaren Verstärkerelemente (M3, M4, M7, M8) auf den Wert des bei der jeweils vorausgehenden Bestromung nur einer der beiden Motorwicklungen (L1, L2) gespeicherten Gesamtstrom regelt.

3. Treiberschaltung nach Anspruch 1 oder 2,
**gekennzeichnet durch**
eine Flankensteilheitsverminderungsschaltung (C1-C4) zur Abschrägung der Impulsflanken der den Motorwicklungen (L1, L2) zugeführten Stromimpulse auf eine vorbestimmte Flankenschräge.

4. Treiberschaltung nach Anspruch 1, für einen Zweiphasen-Schrittmotor mit zwei Motorwicklungen (L1, L2), von denen jede von einer Vollbrückenschaltung (I, II) gespeist wird, wobei die Treiberelemente (M1-M8) von der Steuerlogikschaltung (SL) zur Abgabe von Wicklungsstromimpulsen für einen Vollschrittbetrieb des Schrittmotors gesteuert werden,
**dadurch gekennzeichnet,**
daß eine Flankensteilheitsverminderungsschaltung (C1-C4) zur Abschrägung der Impulsflanken der den Motorwicklungen (L1, L2) zugeführten Stromimpulse auf eine vorbestimmte Flankenschräge vorgesehen ist,
daß die Steuerlogikschaltung (SL) die Steuereingänge der einzelnen Treiberelemente (M1-M8) derart steuert, daß die Polaritätswechsel der Stromimpulse (INV1) der einen Motorwicklung (L1) gegenüber den Polaritätswechseln der Stromimpulse (INV2) der anderen Motorwicklung (L2) um 90° phasenverschoben sind,
daß die Speichereinrichtung (C5, M9) den jeweils während der maximalen Bestromung beider Motorwicklungen (L1, L2) von der Stromfühlereinrichtung (R) erfaßten Gesamtstromwert speichert
und daß die Regelschaltung (OP1-OP5) nur während des Auftretens und der Dauer jeweils einer Flankenschräge eines der beiden Wicklungsstromimpulse (INV1, INV2) aktiv ist und dann den durch die Treiberschaltung fließenden Gesamtstrom über die steuerbaren Verstärkerelemente (M3, M4, M7, M8) auf den Wert des bei der jeweils vorausgehenden maximalen Bestromung beider Motorwicklungen (L1, L2) gespeicherten Gesamtstromwertes regelt.

5. Treiberschaltung nach einem der Ansprüche 1 bis 4,
**dadurch gekennzeichnet,**
daß die Stromfühlereinrichtung durch einen Stromfühlerwiderstand (R) gebildet ist, der einen Endes mit einem (Masse) der beiden Pole der Spannungsversorgungsquelle und anderen Endes mit einem zu diesem Pol (Masse) weisenden gemeinsamen Verbindungspunkt (V10) der Parallelschaltungen (M1, M3; M2, M4; M5, M7; M6, M8) der beiden Vollbrückenschaltungen (I,II) verbunden ist.

6. Treiberschaltung nach einem der Ansprüche 1 bis 5,
**dadurch gekennzeichnet,**
daß die Speichereinrichtung (M9; C5) eine mit dem Meßwert der Stromfühlereinrichtung (R) beaufschlagbare Speicherreihenschaltung aufweist, die einen steuerbaren Speicherschalter (M9) und einen Speicherkondensator (C5) enthält.,
daß der von der Stromfühlereinrichtung (R) erfaßte Strommeßwert bei leitend gesteuertem Speicherschalter (M9) im Speicherkondensator (C5) gespeichert wird
und daß der Speicherschalter (M9) während des von der Regelschaltung (OP1-OP5) bewirkten Regelvorgangs nicht leitend geschaltet ist und somit den Speicherkondensator (C5) von der Stromfühlereinrichtung (5) trennt.

7. Treiberschaltung nach Anspruch 6,
**dadurch gekenntzeichnet,**
daß die Speicherreihenschaltung (M9, C5) zu dem Stromfühlerwiderstand (R) parallel geschaltet ist.

8. Treiberschaltung nach einem der Ansprüche 1 bis 7,
**dadurch gekennzeichnet,**
daß die Regelschaltung (OP1-OP5) eine erste Differenzschaltung (OP5) aufweist, deren einer Eingang mit dem von der Stromfühlereinrichtung (R) erfaßten Meßwert als Istwert, deren anderer Eingang mit dem in der Speichereinrichtung (M9, C5) gespeicherten Speicherwert als Sollwert beaufschlagt wird und deren Ausgang die steuerbaren Verstärkerelemente (M3, M4, M7, M8) derart steuert, daß der durch die Treiberschaltung fließende Gesamtstrom auf den gewünschten Wert geregelt wird.

9. Treiberschaltung nach Anspruch 8,
**dadurch gekennzeichnet,**
daß in mindestens einer der Reihenschaltungen (M1, M3; M2, M4; M5, M7; M6, M8) der beiden Vollbrückenschaltugen (I, II) ein derartiger Querstrom durch diese Reihenschaltung hindurchfließt, daß der durch die Treiberschaltung tließende Gesamtstrom auf den gewünschten Wert geregelt wird.

10. Treiberschaltung nach Anspruch 8 oder 9,
**dadurch gekennzeichnet,**
daß zwischen den Ausgang der Differenzschaltung (OP5) und denjenigen Pol (Masse) der Spannungsversorgungsquelle, zu welchem die die steuerbaren Verstärkerelemente (M3, M4, M7, M8) aufweisenden Enden der beiden Vollbrückenschaltungen (I, II) weisen, eine Reihenschaltung mit einem zum Ausgang der Differenzschaltung (OP5) weisenden ersten (M10) und einem zu dem genannten Pol (Masse) der Spannungsversorgungsquelle weisenden zweiten (M11) Regelschaltungsschalter geschaltet ist,
daß die Regelschaltung eine zweite bis fünfte Differenzschaltung (OP1-OP4) aufweist,
daß von jeder der zweiten bis fünften Differenzschaltung (OP1-OP4) ein erster Eingang (+) mit einem zugeordneten Steuersignalausgang (A-D) der Steuerlogikschaltung (SL), ein zweiter Eingang (-) mit einem Verbindungspunkt (V12) zwischen erstem (M10) und zweitem (M11) Regelschaltungsschalter und ein Ausgang mit einem Steuereingang eines der steuerbaren Verstärkerelemente (M3, M4, M7, M8) gekoppelt ist,
und daß die beiden Regelschaltungsschalter (M10, M11) mittels eines Schaltsteuersignals von der Steuerlogikschaltung (SL) gegenläufig leitend und sperrend steuerbar sind derart, daß der zweite Regelschaltungsschalter (M11) gleichläufig mit dem Speicherschalter (M9) und der erste Regelschaltungsschalter (M10) gegenläufig zum Speicherschalter (M9) leitend bzw. sperrend geschaltet wird.

11. Treiberschaltung nach Anspruch 10,
**dadurch gekennzeichnet,**
daß der Steueranschluß eines jeden der steuerbaren Schalter (M1, M2, M5, M6) der beiden Vollbrückenschaltungen (I, II) über je eine Inverterschaltung (INV1-INV4) mit demjenigen Steuersignalausgang der Steuerlogikschaltung (SL) gekoppelt ist, welcher mit dem ersten Eingang (+) derjenigen Differenzschaltung (OP1-OP4) gekoppelt ist, welche das mit dem jeweiligen steuerbaren Schalter (M1, M2, M5, M6) in Reihenschaltung befindliche steurbare Verstärkerelement (M3, M4, M7, M8) steuert.

12. Treiberschaltung nach Anspruch 11,
**dadurch gekennzeichnet,**
daß die Inverterschaltungen (INV1-INV4) mit einem Flankensteilheitsverminderungskondensator (C1-C4) versehen sind.

13. Treiberschaltung nach einem der Ansprüche 1 bis 11,
**dadurch gekennzeichnet,**
daß sämtliche steuerbaren Schalter (M1, M2, M5, M6, M9-M11) und sämtliche steuerbaren Verstärkerelemente (M3, M4, M7, M8) durch MOS-Transistoren gebildet sind.

14. Treiberschaltung nach einem der Ansprüche 7 bis 12,
**dadurch gekennzeichnet,**
daß sämtliche Differenzschaltungen Differenzverstärker in Form von Operationsverstärkern (OP1-OP5) aufweisen.

## Claims

1. A driver circuit for an electronically commutated electric motor, in particular stepping motor, having n motor windings (L1, L2) each of which is supplied by one of n full bridge circuits (I, II), each full bridge circuit (I, II) having a parallel connection, connected between the two poles (Vs, ground) of a power supply source, with two series-connected controllable driver elements (M1-M8) in each case, and the corresponding motor winding (L1, L2) being connected between the connection point (vl, V3) between the two driver elements (M1, M3, M5, M7) of one series connection and the connection point (V2, V4) between the two driver elements (M2, M4, M6, M8) of the other series connection,
and having a control logic circuit (SL) which is coupled on the output side with control inputs of the individual controllable driver elements (M1-M8) and drives them to release winding current pulses in such a way that there is a tendency toward an alternating component in the total current consumption of the driver circuit,
**characterized** in that
one of the two driver elements in each series connection is operated as a controllable switch (M1, M2, M5, M6) and the other driver element as a controllable amplifier element (M3, M4, M7, M8);
a current sensor device (R) is provided for detecting the particular total current flowing through the driver circuit;
a storage device (M9, C5) is provided for storing the value of the total current flowing through the driver circuit which flows during phases in which the total current is repeated essentially identically;
and a regulator circuit (OP1-OP5) is provided which is active only during phases in which the total current flowing through the driver circuit has a tendency to deviate from the previously measured and stored value and which, during the phases of regulation via the controllable amplifier elements (M3, M4, M7, M8), influences the current conditions in the individual full bridge circuits (I, II) in such a way that the total current flowing through the driver circuit is regulated to the stored measured value.

2. The driver circuit of claim 1, for a two-phase stepping motor,
having two motor windings (L1, L2) each of which is supplied by a full bridge circuit (I, II), the driver elements (M1-M8) being driven by the control logic circuit (SL) to release winding current pulses for a half-step mode of the stepping motor in such a way that alternatingly only one motor winding (L1), only the other motor winding (L2) or both motor windings (L1, L2) are energized,
**characterized** in that
the storage device (C5, M9) stores the particular total current detected by the current sensor device (R) during energizing of only one of the motor windings (L1, L2),
and the regulator circuit (OP1-OP5) is active only during energizing of both motor windings (L1, L2) and then regulates the total current flowing through the driver circuit via the controllable amplifier elements (M3, M4, M7, M8) to the value of the total current stored during preceding energizing of only one of the motor windings (L1, L2).

3. The driver circuit of claim 1 or 2, characterized by an edge steepness reducing circuit (C1-C4) for slanting the pulse edges of the current pulses fed to the motor windings (L1, L2) to a predetermined edge slope.

4. The driver circuit of claim 1, for a two-phase stepping motor, having two motor windings (L1, L2) each of which is supplied by a full bridge circuit (I, II), the driver elements (M1-M8) being driven by the control logic circuit (SL) to release winding current pulses for a full-step mode of the stepping motor,
**characterized** in that
an edge steepness reducing circuit (C1-C4) is provided for slanting the pulse edges of the current pulses fed to the motor windings (L1, L2) to a predetermined edge slope,
the control logic circuit (SL) drives the control inputs of the individual driver elements (M1-M8) in such a way that the polarity reversals of the current pulses (INV1) of one motor winding (L1) are phase-shifted by 90° over the polarity reversals of the current pulses (INV2) of the other motor winding (L2),
the storage device (C5, M9) stores the total current value detected by the current sensor device (R) during maximum energizing of both motor windings (L1, L2),
and the regulator circuit (OP1-OP5) is active only during the occurrence and duration of an edge slope of one of the two winding current pulses (INV1, INV2) and then regulates the total current flowing through the driver circuit via the controllable amplifier elements (M3, M4, M7, M8) to the value of the total current value stored at the preceding maximum energizing of both motor windings (L1, L2).

5. The driver circuit of any of claims 1 to 4, characterized in that the current sensor device is formed by a current sensor resistor (R) which is connected at one end with one (ground) of the two poles of the voltage supply source and at the other end with a common connection point (V10), pointing to this pole (ground), of the parallel connections (M1, M3; M2, M4; M5, M7; M6, M8) of the two full bridge circuits (I, II).

6. The driver circuit of any of claims 1 to 5,
**characterized** in that
the storage device (M9; C5) has a storage series connection to be subjected to the measured value of the current sensor device (R) and containing a controllable storage switch (M9) and a storage capacitor (C5),
the measured current value detected by the current sensor device (R) is stored in the storage capacitor (C5) when the storage switch (M9) is rendered conductive,
and the storage switch (M9) is rendered nonconductive during the regulation process caused by the regulator circuit (OP1-OP5) and thus separates the storage capacitor (C5) from the current sensor device (5).

7. The driver circuit of claim 6, **characterized** in that the storage series connection (M9, C5) is connected in parallel with the current sensor resistor (R).

8. The driver circuit of any of claims 1 to 7, **characterized** in that the regulator circuit (OP1-OP5) has a first difference circuit (OP5) whose one input is fed the measured value detected by the current sensor device (R) as the actual value, whose other input is fed the storage value stored in the storage device (M9, C5) as the set point, and whose output drives the controllable amplifier elements (M3, M4, M7, M8) in such a way that the total current flowing through the driver circuit is regulated to the desired value.

9. The driver circuit of claim 8, **characterized** in that an idle current flows through at least one of the series connections (M1, M3; M2, M4; M5, M7; M6, M8) of the two full bridge circuits (I, II) such that the total current flowing through the driver circuit is regulated to the desired value.

10. The driver circuit of claim 8 or 9,
**characterized** in that
between the output of the difference circuit (OP5) and the pole (ground) of the voltage supply source to which the ends of the two full bridge circuits (I, II) having the controllable amplifier elements (M3, M4, M7, M8) point, a series connection with a first regulator circuit switch (M10) pointing to the output of the difference circuit (OP5) and a second regulator circuit switch (M11) pointing to said pole (ground) of the voltage supply source is connected,
the regulator circuit has second to fifth difference circuits (OP1-OP4),
of each of the second to fifth difference circuits (OP1-OP4) a first input (+) is coupled with an associated control signal output (A-D) of the control logic circuit (SL), a second input (-) with a connection point (V12) between first (M10) and second (M11) regulator circuit switches and an output with a control input of one of the controllable amplifier elements (M3, M4, M7, M8),
and the two regulator circuit switches (M10, M11) are drivable to be conductive and nonconductive opposingly by means of a switch control signal from the control logic circuit (SL) in such a way that the second regulator circuit switch (M11) is rendered conductive or nonconductive synchronously with the storage switch (M9), and the first regulator circuit switch (M10) opposingly to the storage switch (M9).

11. The driver circuit of claim 10, **characterized** in that the gate of each of the controllable switches (M1, M2, M5, M6) of the two full bridge circuits (I, II) is coupled via an inverter circuit (INV1-INV4) with that control signal output of the control logic circuit (SL) which is coupled with the first input (+) of that difference circuit (OP1-OP4) which drives the controllable amplifier element (M3, M4, M7, M8) in series connection with the particular controllable switch (M1, M2, M5, M6).

12. The driver circuit of claim 11, **characterized** in that the inverter circuits (INV1-INV4) are provided with an edge steepness reducing capacitor (C1-C4).

13. The driver circuit of any of claims 1 to 11, **characterized** in that all controllable switches (M1, M2, M5, M6, M9-M11) and all controllable amplifier elements (M3, M4, M7, M8) are formed by MOS transistors.

14. The driver circuit of any of claims 7 to 12, **characterized** in that all difference circuits have difference amplifiers in the form of operational amplifiers (OP1-OP5).

## Revendications

1. Circuit de commande de moteur commuté électroniquement, notamment d'un moteur pas à pas, ayant n bobinages (L1, L2), dont chacun est alimenté par l'un de n circuits en pont complet (I, II), chacun des circuits en pont complet (I, II) comprenant un circuit parallèle à deux éléments de pilotage commandés connectés en série entre les deux pôles (Vs, Masse) d'une source de courant d'alimentation, et le bobinage correspondant (L1, L2) du moteur étant connecté entre le point de connexion (V1, V3) entre les deux éléments de pilotage (M1, M3, M5, M7) de l'un des circuits série et le point de connexion (V2, V4) entre les deux éléments de pilotage (M2, M4, M6, M8) de l'autre circuit série,
et comprenant un circuit logique de commande (SL) qui, du côté de la sortie, est couplé à des entrées de commande des éléments de pilotage commandés individuels (M1, M8) et commande ceux ci afin de délivrer des impulsions de courant de bobine, de manière que le courant consommé globalement par le circuit de commande tende vers une composante alternative,
caractérisé en ce que :
dans chaque circuit série, l'un des deux éléments de pilotage est utilisé en tant que commutateur commandé (M1, M2, M5, M6) et l'autre élément de pilotage est utilisé en tant qu'élément d'amplification commandé (M3, M4, M7, MB) ;
un dispositif capteur de courant (R) est prévu pour mesurer le courant d'ensemble parcourant le circuit de commande ;
un dispositif de mémorisation (M9, C5) est prévu pour mémoriser la valeur du courant d'ensemble circulant dans le circuit de commande, laquelle valeur est établie pendant les phases dans lesquelles le courant d'ensemble se répète pratiquement à l'identique ; et
un circuit de régulation (OP1-OP5) qui est actif pendant des phases où le courant d'ensemble circulant dans le circuit de commande présente une tendance à la baisse par rapport à la valeur précédemment mesurée et mémorisée, et qui, pendant les phases de la régulation, agit sur les rapports de courant dans les circuits en pont complet (I, II) individuels par l'intermédiaire des éléments d'amplification commandés (M3, M4, M7, M8), de manière que le courant d'ensemble circulant dans le circuit de commande soit régulé sur la valeur de mesure mémorisée.

2. Circuit de commande selon la revendication 1 pour un moteur pas à pas bipolaire comportant deux bobinages de moteur (L1, L2) dont chacun est alimenté par un circuit en pont complet (I, II), les éléments de pilotage (M1-M8) étant commandés par le circuit logique de commande (SL) afin de fournir des impulsions de courant de bobinage pour un fonctionnement en demi-pas du moteur pas à pas, de manière que soient alimentés, à tour de rôle, seul l'un des bobinages (L1), seul l'autre bobinage (L2), et les deux bobinages (L1, L2),
caractérisé en ce que le dispositif de mémorisation (C5, M9) mémorise le courant d'ensemble mesuré par le dispositif capteur de courant (R) pendant l'alimentation d'un seul des deux bobinages (L1, L2) et en ce que le circuit de régulation (OP1-OP5) est actif seulement lors de l'alimentation des deux bobinages (L1, L2) et règle alors, par l'intermédiaire des éléments d'amplification commandés (M3, M4, M7, M8), le courant d'ensemble circulant dans le circuit de commande sur la valeur du courant d'ensemble mémorisé lors de l'alimentation précédente d'un seul des deux bobinages (L1, L2).

3. Circuit de commande selon la revendication 1 ou 2, caractérisé par un circuit de réduction de pente de front (C1-C4) pour réduire la pente des fronts des impulsions de courant fournies aux bobinages (L1, L2) à une pente prédéterminée.

4. Circuit de commande selon la revendication 1 pour un moteur pas à pas bipolaire comportant deux bobinages (L1, L2) dont chacun est alimenté par un circuit en pont complet (I, II), les éléments de pilotage (M1-M8) étant commandés par le circuit logique de commande (SL) afin de délivrer des impulsions de courant de bobinage pour un fonctionnement en pas complets du moteur pas à pas, caractérisé en ce que :
un circuit de réduction de pente de front (C1-C4) est prévu pour réduire les pentes des fronts des impulsions de courant fournies aux bobinages (L1, L2) à une pente prédéterminée ;
le circuit logique (SL) commande les entrées de commande des éléments de pilotage individuels (M1-M8), de manière que les changements de polarité des impulsions de courant (INV1) de l'un des bobinages (L1) par rapport aux changements de polarité des impulsions de courant (INV2) de l'autre bobinage soient déphasés de 90° ;
le dispositif de mémorisation (C5, M9) mémorise la valeur de courant mesurée par le dispositif capteur de courant (R) pendant l'alimentation maximale des deux bobinages (L1, L2), et
le circuit de régulation (DP1-CP5) est actif seulement pendant la durée de chaque front incliné de l'une des deux impulsions de courant de bobinage (INV1-INV2) et règle alors, par l'intermédiaire des éléments d'amplification commandés (M3, M4, M7, M8), le courant d'ensemble circulant dans le circuit de commande sur la valeur du courant d'ensemble mémorisée lors de l'alimentation maximale précédente des deux bobinages (L1, L2).

5. Circuit de commande selon l'une quelconque des revendications 1 à 4, caractérisé en ce que le dispositif capteur de courant est constitué d'une résistance captrice de courant (R) dont une première borne est reliée à l'un (Masse) des deux pôles de la source de courant d'alimentation et dont l'autre borne est reliée à un point de connexion (V10) du côté de ce pôle (Masse) et commun aux circuits parallèles (M1, M3 ; M2, M4 ; M5, M7 ; M6, M8) des deux circuits en pont complet (I, II).

6. Circuit de commande selon l'une quelconque des revendications 1 à 5, caractérisé en ce que :
le dispositif de mémorisation (M9, C5) comporte un circuit de mémorisation série pouvant être alimenté par la valeur de mesure du dispositif capteur de courant (R), comprenant un commutateur de mémorisation commandé (M9) et un condensateur de mémorisation (C5),
la valeur de courant mesurée par le dispositif capteur de courant (R) est mémorisée par le condensateur de mémorisation (C5) lorsque le commutateur de mémorisation (M9) est commandé pour être conducteur, et
le commutateur de mémorisation (M9) n'est pas conducteur pendant la procédure de régulation opérée par le circuit de régulation (DP1-CP5) et isole donc le condensateur de mémorisation (C5) du dispositif capteur de courant (5).

7. Dispositif de commande selon la revendication 6, caractérisé en ce que le circuit série de mémorisation (M9-C5) est connecté en parallèle sur la résistance de mesure de courant (R).

8. Circuit de commande selon l'une quelconque des revendication 1 à 7 caractérisé en ce que le circuit de régulation (DP1-CP5) comporte un premier circuit différentiel (CP5) dont l'une des entrées reçoit la valeur de mesure acquise par le circuit capteur de courant (R) en tant que valeur instantanée, dont l'autre entrée reçoit la valeur mémorisée dans le dispositif de mémorisation (M9, C5) en tant que valeur de consigne, et dont la sortie commande les éléments d'amplification (M3, M4, M7, M8) de manière que le courant d'ensemble circulant dans le circuit de commande soit régulé sur la valeur souhaitée.

9. Circuit de commande selon la revendication 8, caractérisé en ce qu'au moins un des circuits série (M1, M3 ; M2, M4 ; M5, M7 ; M6, M8) des deux circuits en pont complet (I, II) est parcouru par un courant transverse de manière que le courant d'ensemble circulant dans le circuit de commande soit régulé sur la valeur souhaitée.

10. Circuit de commande selon la revendication 8 ou 9, caractérisé en ce que :
un circuit série est connecté entre la sortie du circuit différentiel (CP5) et celui des pôles (Masse) de la source de courant d'alimentation vers lequel sont tournées les bornes reliées aux éléments d'amplification commandés (M3, M4, M7, M8) des deux circuits en pont complet (I, II), le circuit série comportant un premier commutateur de régulation (M10) relié à la sortie du circuit différentiel (CP5) et un deuxième commutateur de régulation (M11) relié audit pôle (Masse) de la source de courant d'alimentation,
le circuit de régulation comporte des deuxième à cinquième circuits différentiels (OP1-OP4),
dans chacun des deuxième à cinquième circuits différentiels (OP1-OP4), une première entrée (+) est couplée à une sortie de signal de commande correspondante (A-D) du circuit logique de commande (SL), une deuxième entrée (-) est couplée à un point de connexion (V12) entre le premier (M10) et le deuxième (M11) commutateur de régulation, et une sortie est reliée à une entrée de commande de l'un des éléments d'amplification commandés (M3, M4, M7, M8), et
les deux commutateurs de régulation (M10, M11) sont commandés pour conduire et se bloquer en opposition de phase au moyen d'un signal de commande fourni par le circuit logique de commande (SL), de manière que le deuxième commutateur de régulation (M11) soit commuté en phase avec le commutateur de mémorisation (M9) et le premier commutateur de régulation (M10) soit commuté en opposition de phase avec le commutateur de mémorisation (M9).

11. Circuit de commande selon la revendication 10, caractérisé en ce que la borne de commande de chacun des commutateurs commandés (M1, M2, M5, M6) des deux circuits en pont complet (I, II) est couplée par un circuit inverseur respectif (INV1-INV4) à celle des sorties de commande du circuit logique de commande (SL) qui est couplée à la première entrée (+) de celui des circuits différentiels (OP1-OP4) qui commande l'élément d'amplification commandé (M3, M4, M7, M8) se trouvant dans le circuit série correspondant au commutateur commandé (M1, M2, M5, M6).

12. Circuit de commande selon la revendication 11, caractérisé en ce que les circuits inverseurs (INV1-INV4) sont munis d'un condensateur (C1-C4) de diminution de pente de front.

13. Circuit de commande selon l'une quelconque des revendications 1 à 11, caractérisé en ce que l'ensemble des commutateurs commandés (M1, M2, M5, M6, M9-M11) et l'ensemble des éléments d'amplification commandés (M3, M4, M7, M8) sont constitués de transistors MOS.

14. Circuit de commande selon l'un quelconque des revendications 7 à 12, caractérisé en ce que les circuits différentiels sont des amplificateurs différentiels sous la forme d'amplificateurs opérationnels (OP1-OP5).
